# EUROPÄISCHE PATENTSCHRIFT

(11) **EP 0 210 698 B1**
(45) Veröffentlichungstag und Bekanntmachung des Hinweises auf die Patenterteilung: **07.07.1993**
(21) Anmeldenummer: 86201267.1
(22) Anmeldetag: 21.07.1986
(51) Int. Cl.: H04Q 7/04, H04J 3/16, H04B 7/26

(54) **Digitales Funkübertragungssystem mit variabler Zeitschlitzdauer der Zeitschlitze im Zeitmultiplexrahmen**
Radio transmission system with a variable time slot duration in a time division multiplex frame
Système de radio-transmission avec durée variable des intervalles temporaires d'une trame multiplex dans le temps

(30) Priorität: 31.07.1985 DE 3527329
(43) Veröffentlichungstag der Anmeldung: 04.02.1987
(73) Patentinhaber: Philips Patentverwaltung GmbH, 22335 Hamburg (DE); Philips Electronics N.V., 5621 BA Eindhoven (NL)
(72) Erfinder: Eizenhöfer, Alfons, Dr.-Ing., D-8503 Altdorf (DE)
(74) Vertreter: Peuckert, Hermann, Dipl.-Ing.

(56) Entgegenhaltungen:
- EP-A- 0 069 275
- DE-A- 1 591 744
- FR-A- 2 036 328

## Beschreibung

Die Erfindung betrifft ein digitales Funkübertragungssystem gemäß dem Oberbegriff des Patentanspruchs 1.

Zur Nachrichtenübertragung über ein von einer Vielzahl von Teilnehmern gemeinsam benutztes Übertragungsmedium (z. B. Leitung, Funkstrecke) sind drei Grundverfahren bekannt, nämlich das Codemultiplex-Verfahren, das Frequenzmultiplex-Verfahren und das Zeitmultiplex-Verfahren.

Beim Codemultiplex-Verfahren werden beispielsweise die verschiedenen, über ein gemeinsames Übertragungsmedium geführten Nachrichten durch Basis-Modulation einem Träger aufmoduliert und das sich ergebende im Vergleich zur Kanalbandbreite schmalbandige Signal wird durch Multiplex-Modulation mit Hilfe eines den Empfänger kennzeichnenden Codeworts auf die Kanalbandbreite spektral gespreizt.

Die Erkennung des Signals erfolgt nicht durch zeitliche oder frequenzmäßige Selektion, sondern anhand der spektralen Codierung. Die im Codemultiplex-Kanal überlagerte Vielzahl von spektralcodierten Nachrichten werden im Empfänger anhand des diesem zugeordneten Codeworts selektiert.

Beim Frequenzmultiplex-Verfahren wird die zur Nachrichtenübertragung zur Verfügung stehende Gesamtbandbreite in schmale Frequenzbänder unterteilt, welche jeweils einem Nachrichtenübertragungskanal entsprechen. Für die Dauer der Funkübertragung steht dem Teilnehmer ein solches schmales Frequenzband zur Verfügung.

Beim Zeitmultiplex-Verfahren steht jedem Teilnehmer die gesamte Bandbreite eines einzigen Funkkanals zur Verfügung, welchen der Teilnehmer aber nur für kurze Zeitabschnitte benutzen darf. Die Zeichen oder Zeichenfolgen verschiedener Teilnehmer sind ineinander verschachtelt und werden mit entsprechend höherer Bitrate im einzigen Funkkanal übertragen, wobei der jeweils einem Teilnehmer zugeordnete Zeitkanal sich periodisch mit der Rahmenperiodendauer wiederholt.

Aus der DE-OS 25 37 683 ist ein Funkübertragungssystem mit ortsfesten Funkstationen und beweglichen Funkstationen bekannt, bei welchem verschiedene Kanalzugriffsverfahren mit asynchronem Zeitmultiplex, mit Codemultiplex und mit Frequenzmultiplex verwendet werden.

Auch Kombinationen der vorgenannten Verfahren und deren Anwendung in einem digitalen Funkübertragungssystem sind bekannt. Beispielsweise ist in "Nachrichtentechnik, Elektronik + Telematic 38 (1984), Heft 7, Seiten 264 bis 268" ein digitales Funkübertragungssystem beschrieben, bei dem das Zeitmultiplex-Verfahren in Kombination mit Codespreizung verwendet wird, wobei jedoch keine Trennung verschiedener Teilnehmer unter Anwendung des Codemultiplexverfahrens erfolgt. In den Zeitkanälen zur Sprach- und/oder Datenübertragung (Kommunikationskanal TCH) werden nacheinander eine Bit-Folge zur Ermittlung des Bit-Takts (Synchron), ein Rahmen-Synchronisationswort (Vorspann) und die Bit-Folge der Nachricht selbst übertragen. Die Zeitkanäle zur Nachrichtenübertragung (3x20 TCH) sind mit Organisationskanälen (3 CCH) zu einem Zeitmultiplexrahmen mit der Zeitdauer 31,5 msec. angeordnet. Soll als Nachricht das Sprachsignal übertragen werden, so kann zur Analog-/Digitalwandlung die adaptive Deltamodulation verwendet werden. Die dabei entstehenden Nachrichtenzeichen (Bit) werden im Sender mit einem Code überlagert. Es hat sich als vorteilhaft erwiesen, die einzelnen Nachrichtenzeichen in Blöcke zu je vier Bit zusammen zu fassen und die so entstehenden Blöcke mit einem orthogonalen Alphabet zu spreizen. Der dabei verwendete Spreizfaktor ist ein Kompromiß, um die Vorteile der Bandspreizung mit der Forderung nach Frequenzökonomie miteinander zu vereinigen.

Wie aus den vorstehenden Ausführungen hervorgeht, ist es bei Funkübertragungssystemen bekannt, eine Vielzahl von Nachrichtenkanälen im Zeitmultiplex zu übertragen. Dabei ist der Zeitmultiplexrahmen in ein festes Zeitraster eingeteilt und der beweglichen Funkstation wird von der ortsfesten Funkstation mitgeteilt, im welchem Zeitschlitz die bewegliche Funkstation Informationen empfangen bzw. senden kann. Ein solches Zeitmultiplexverfahren ist von Vorteil, wenn alle Teilnehmer im Übertragungssystem die gleiche Kanalbandbreite für die Nachrichtenübertragung benötigen. Sind Teilnehmer mit unterschieldlichem Bandbreitebedarf im Übertragungssystem vorhanden dann wird die (einem Teilnehmer zur Verfügung stehende) Kanalkapazität von Teilnehmern mit geringem Bandbreitebedarf nicht voll ausgelastet. Dies ist insbesondere bei der Übertragung der Nachricht über eine Funkstrecke von Nachteil, da in einem Funkübertragungssystem die Systembandbreite ohnehin begrenzt ist. Solche Teilnehmer mit unterschiedlichem Bandbreitebedarf treten bei der Datenübertragung für verschiedene Dienste z.B. Telefax, Teletext, Rechnerkommunikation usw. auf. Es kann erwartet werden, daß infolge des Fortschritts der Technik in Zukunft weniger Bandbreite für die Sprachübertragung, insbesondere bei Analog-Digitalwandlung, benötigt werden. Die spätere Einführung einer solchen neuen Generation von beweglichen Funkstationen mit einem geringerem Bandbreitebedarf ist bei einer Einteilung des Zeitmultiplexrahmens in ein festes Raster nur bedingt möglich.

Aus der DE-PS 31 05 199 ist ein Verfahren zur Übertragung von Datenpaketen von mehreren Nebenstellen zu einer Hauptstelle über einen gemeinsamen Kanal bekannt, bei dem die Zuteilung der Zeitschlitze zu den Nebenstellen bzw. Teilnehmern dynamisch ist. Dynamisch Zuteilung bedeutet, daß einem Teilnehmer nach einem Zugriff so viele Zeitschlitze zugeteilt werden, wie dieser zur Übertragung der Information benötigt, wobei die Zahl der Zeitschlitze sich von Zugriff zu Zugriff und von Teilnehmer zu Teilnehmer ändert.

Ein solches Verfahren eignet sich zur Übertragung von Meldungen und nicht zeitkritischen Paketdaten, da die Zeit zwischen zwei erfolgreichen Zugriffen nicht bestimmbar ist, d.h. es kann keine feste Datenübertragungsrate garantiert werden. Ein solches Verfahren läßt sich jedoch nicht einsetzen für die Übertragung von Sprache, da bei einer Übertragung eines Sprachsignals während des Gesprächs erst, gemäß dem in der DE-PS 31 05 199 angegebenen Verfahren, ein erneuter Zugriff auf den gemeinsamen Übertragungskanal erfolgen müßte. Ob ein solcher Zugriff erfolgreich ist oder nicht, ist dabei abhängig vom Verkehrsangebot, so daß dieses Verfahren für die Übertragung von Meldungen und zeitkritischen Daten mit unterschiedlich großer aber konstanter Datenrate nicht angewandt werden kann.

Der Erfindung liegt die Aufgabe zugrunde, in einem digitalen Funkübertragungssystem, bei dem im gemeinsamen Funkübertragungskanal die zu übertragenen Nachrichten nach dem Zeitmultiplexverfahren zusammengefaßt werden, die Kanalkapazität des Funkübertragungskanals optimal auszunutzen.

Diese Aufgabe wird erfindungsgemäß bei einem digitalen Funkübertragungssystem mit den Merkmalen des Patentanspruchs 1 gelöst.

Das erfindungsgemäße digitale Funkübertragungssystem mit variabler Zeitschlitzdauer der Zeitschlitze im Zeitmultiplexrahmen weist den Vorteil auf, daß die Kanalkapazität des Funkübertragungskanals bei Teilnehmer mit unterschieldichem Bandbreitebedarf optimal genutzt wird. Da die nutzbare Kanalkapazität des Zeitmultiplexrahmens sich in beliebigen Schritten gemäß den Anforderungen der Teilnehmer aufteilen läßt, ist auch für zukünftige Systemerweiterungen die Möglichkeit der Anpassung gegeben.

Das erfindungsgemäße digitale Funkübertragungssystem wird im folgenden anhand in der Zeichnung dargestellter Ausführungsformen näher beschrieben und erläutert. Es zeigt:
- Fig. 1: die Einteilung des Zeitmultiplexrahmens,
- Fig. 2: die Multiplexbildung innerhalb einer Funkzelle,
- Fig. 3: das Blockschaltbild des Sendeteils der ortsfesten Funkstation und
- Fig. 4: das Blockschaltbild des Empfangsteils in der beweglichen Funkstation.

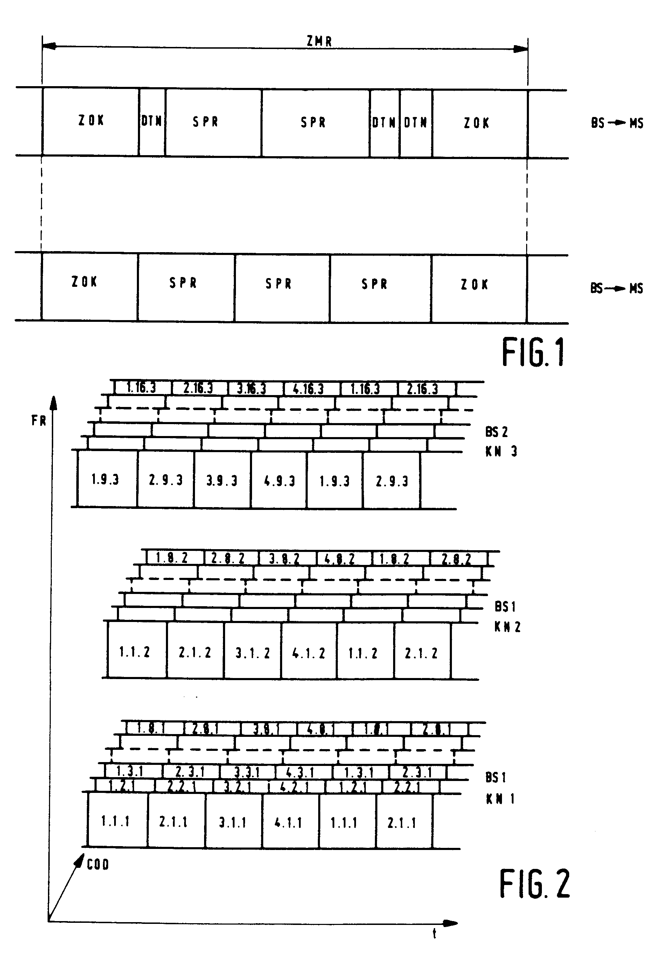

Der in Fig. 1 dargestellte Zeitmultiplexrahem enthält einen zentralen Organisationskanal und kann beispiels weise durch drei Daten- und zwei Sprachkanäle (1. Zeile) oder durch drei Sprachkanäle (2. Zeile) belegt werden. Der zentrale Organisationskanal, über den die Zeitzutei lung von der ortsfesten Funkstation BS den beweglichen Funkstationen MS mitgeteilt wird, kann sich auch in eine anderen Kanal auf einer anderen Trägerfrequenz befinden. Der Empfänger in der beweglichen Funkstation MS benötigt lediglich die Rahmen- und Bitsynchronisation und die Information über das erste und letzte Bit des dieser beweglichen Funkstation MS zugeteilten Zeitkanals.

Anhand der Fig. 2 bis 4 wird eine Ausführungsform eines digitalen Funkübertragungssystems näher beschrieben und erläutert, beim dem für die Bündelung der Nachrichtenkanäle unterschiedliche Kombinationen von Multiplexverfahren angewandt werden. Die zu sendende Nachricht wird in der Übertragungsrichtung von der ortsfesten Funkstation BS zu den beweglichen Funkstation MS in die Nachrichtenkanäle unter Anwendung der Kombination von Codemultiplex-, Zeitmultiplex- und Frequenzmultiplexverfahren eingefügt. Für die Übertragungsrichtung von der beweglichen Funkstation MS zur ortsfesten Funkstation BS kann beispielsweise die Nachrichtenübertragung in voneinander getrennten, schmalbandigen Frequenzkanälen erfolgen.

Im digitalen Funkübertragungssystem sind ortsfeste Funkstationen BS räumlich nach einem Zellensystem angeordnet. Jeder ortsfesten Funkstation BS sind eine Anzahl von Funkübertragungskanälen zugeordnet, über welche Nachrichten zu beweglichen Funkstation MS übertragen werden.

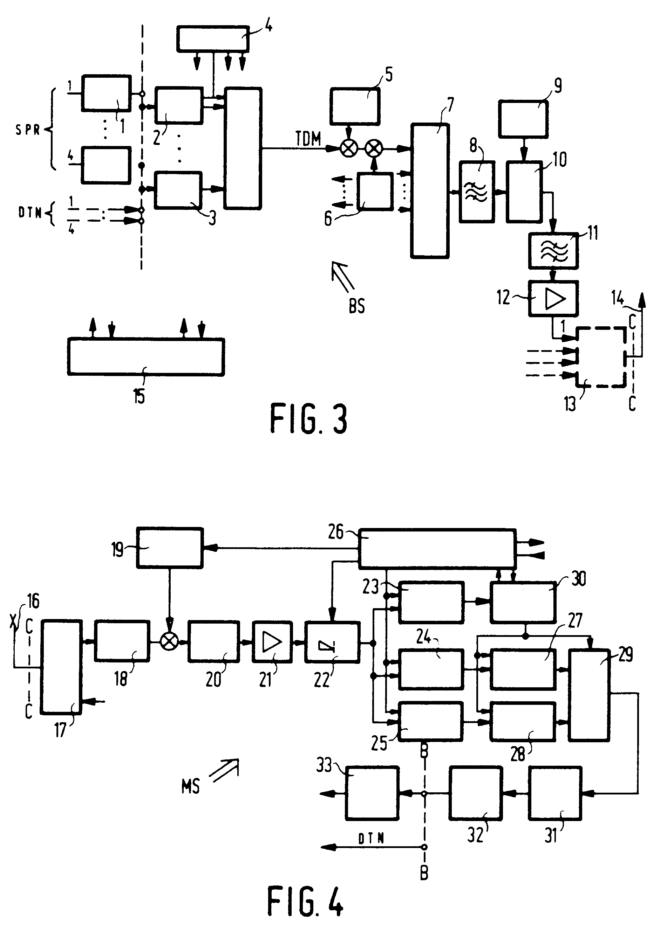

In den beiden Übertragungsrichtungen werden für die Bündelung von Nachrichtenkanälen unterschiedliche Kombinationen von Multiplexverfahren angewandt. In der Übertragunsrichtung von der ortsfesten funkstation BS zu den beweglichen Funkstationen MS wird die zu sendende Nachricht (Sprache oder Daten) in die Nachrichtenkanäle unter An wendung von Codemultiplex-, Zeitmultiplex- und Frequenzmultiplexverfahren eingefügt. Hierzu sind in der ortsfesten Funkstation BS unter anderem ein TDM-Multiplexer 3, ein Codewortgenerator 5 und ein Synthesizer 9 angeordnet (vgl. Fig. 3). In der beweglichen Funkstation MS erfolgt die Trennung der Nachrichtenkanäle des empfangenen Digitalsignals unter Anwendung des Codemultiplex-, Zeitmultiplex- und Frequenzmultiplexverfahrens. Hierzu sind in der beweglichen Funkstation MS unter anderem ein Synthesizer 19, Korrelatoren 24 und 25 und ein TDM-Demultiplexer 31 (vgl. Fig. 4) vorgesehen. Für die Übertragungsrichtung von den beweglichen Funkstationen MS zur ortsfesten Funkstation BS erfolgt die Nachrichtenübertragung in voneinander getrennten, schmalbandigen Frequenzkanälen. Im folgenden wird die Multiplexbildung für die Übertragungsrichtung von der ortsfesten Funkstation BS zu den beweglichen Funkstationen MS näher beschrieben und erläutert.

Eine ortsfeste Funkstation BS weist beispielsweise mindestens einen Kanalsatz, bestehend aus 32 Nachrichtenkanälen, auf. Die einzelnen Nachrichtenkanäle für die verschiedenen beweglichen Funkstationen MS in einem Kanalsatz sind durch verschiedene Spreizcodewörter (CDMA) und/oder verschiedene Zeitschlitze (TDMA) voneinander getrennt. In Fig. 2 sind drei solcher Kanalsätze dargestellt, wobei in dem gezeigten Beispiel Kanalsätze 1 und 2 zur gleichen Funkzelle und Kanalsatz 3 zu einer benachbarten Funkzelle gehören. Die Kennzeichnung der einzelnen Nachrichtenkanäle (Kanalkennung) ist in Fig. 2 durch die Zahlenfolge mit drei Ziffern verdeutlicht. Dabei bedeutet die erste Ziffer die Nummer des jeweiligen Zeitschlitzes, die zweite Ziffer das jeweils verwendete Codewort und die dritte Ziffer die jeweilige Nummer der verwendeten Trägerfrequenz. Die Bündelung der Nachrichtenkanäle in der Übertragungsrichtung von der ortsfesten Funkstation BS zu den beweglichen Funkstationen MS erfolgt durch die Aufeinanderfolge des Zeitmultiplex-, Codemultiplex-und schließlich Frequenzmultiplexverfahrens. Diese bevorzugte Aufeinanderfolge erleichtert die Realisierung der Sende- und Empfangseinrichtungen des digitalen Funküberträgungssystems.

Der Aufbau eines Kanalsatzes erfolgt z.B. dadurch, daß mehrere Zeitschlitze, von denen jeder die Information für jeweils einen Teilnehmer beinhaltet, zu einem Zeitmultiplexrahmen zusammengefaßt werden. In Fig. 2 umfaßt der Zeitmultiplexrahmen vier Zeitschlitze, z.B. Nachrichtenkanal 1.1.1 bis 4.1.1. Der Zeitmultiplexrahmen besteht beispielsweise aus 800 Symbolen und hat ein Periodendauer von 20 msec. Davon sind 20 Synchronisationssymbole in regelmäßigen Abständen über den Rahmen verteilt. Die Synchronisationsbits sind in Fig. 1 nicht eingezeichnet. Für einen gemeinsamen Organisationskanal sind eine Anzahl von Symbolen, vorzugsweise am Rahmenanfang angeordnet, vorgesehen. In der Regel ist der Zeitmultiplexrahmen mit vier Sprechkanälen zu je 16 kbits Nutzbitrate und 3 kbits Redundanz belegt. Die einzigen Festlegungen, die im digitalen Funkübertragungssystem für die Bildung des Zeitmultiplexrahmens getroffen werden müssen, ist die Rahmenlänge und die Lage des Organisationskanals im Zeitmultiplexrahmen.

Anschließend wird die Information solcher Zeitmultiplexrahmen mit geeignet gewählten Codewörtern gespreizt, welche es erlauben, mehrere Zeitmultiplexrahmen gleichzeitig und mit derselben Trägerfrequenz zu übertragen. Dabei erfolgt die Spreizung jedes dieser Zeitmultiplexrahmen mit einem Codewort, welches in diesem Kanalsatz nur diesem speziellen Zeitmultiplexrahmen zugeordnet ist. Das bedeutet zum einen, daß innerhalb eines Kanalsatzes jeder Zeitmultiplexrahmen für die Spreizung ein für ihn spezifisches und von den anderen Zeitmultiplexrahmen unterschiedliches Codewort enthält und zum anderen, daß die Information in den Zeitschlitzen eines Zeitmultiplexrahmens mit dem gleichen Codewort gespreizt wird.

Bei der in Fig. 2 dargestellten Ausführungsform werden acht verschiedene Codewörter pro Kanalsatz verwendet, d.h. ein Kanalsatz enthält acht verschiedene Zeitmultiplexrahmen mit jeweils vier Zeitkänalen, zusammen also 32 Nachrichtenkanäle pro Kanalsatz.

Durch die Vergabe von ausgesuchten Codesymbolen für die Spreizung, wie z.B. psuedozufällige, orthogonale oder quasiorthogonale Codewörter, ist die gleichzeitige Übertragung von nachrichten im Codemultiplex möglich. Die acht individuellen Spreizcodes weisen eine Spreizung von 31, d.h. eine Länge von 31 Chips, auf. Dabei werden alle Codemultiplex-Kanäle von dem Sender der ortsfesten Funkstation BS mit gleicher Leistung und zeitsynchron gesendet. Durch die Verwendung von vier Symbolen in jedem Codemultiplex-Kanal (die vier Symbole lassen sich z.B. durch zwei antipodale Codewörter darstellen) lassen sich zwei Bit des Nutzsignals zu einem Symbol zusammenfassen. Dadurch verringert sich die Symbolrate gegenüber der Bitrate des Basisband um die Hälfte. Für die Codierung des Basisbandsignals und der Synchronisierung stehen sechs verschiedene Symbole zur Verfügung, von denen zwei ausschließlich für die Synchronisation verwendet werden. Werden acht individuelle Spreizcodeebenen mit vier zeitlich gestaffelten Kanälen gebildet, so können 32 Nachrichtenkanäle von beispielsweise 16 kbit/s übertragen werden, welche nach Codespreizung einem gemeinsamen HF-Träger aufmoduliert werden. Bei Anwendung einer 4-Phasenmodulation ergibt sich für die Übertragung von 32 Nachrichtenkanälen z.B. eine Bandbreite von 1,25 MHz. Die Zeitstaffelung und damit die Zahl der Nachrichtenkanäle pro Spreizcodeebene hängt von der für jeden Nachrichtenübertragungskanal benötigten Bitrate ab.

Wegen der Zusammenfassung von je zwei Bit zu einem von vier möglichen Symbolen bleibt einerseits die Symboldauer mit 25 us genügend lang um Intersymbolinterferenzen, die durch Mehrwegeempfang entstehen, zu vermeiden und andererseits ist der Aufwand in den Empfangseinrichtungen für die Korrelatoren niedrig. Die innerhalb einer ortsfesten Funkstation BS zur Trennung der Codeebenen benutzten 16 Spreizcodes sind beispielsweise paarweise orthogonal, während in verschiedenen ortsfesten Funkstationen BS mit gleichem Träger , die unterschiedlichen Synchronisiersymbole möglichst geringe Kreuzkorrelationsprodukte aufweisen sollen, bei beliebigen zeitlichen Verschiebungen.

Für die Spreizung können z.B. Gold-Codes verwendet werden. Eine Änderung des Spreizcodes hat nur geringen Einfluß auf die Empfangseinrichtung, da diese programmierbare Korrelatoren aufweist, welche von Verbindung zu Verbindung auf Anweisung der ortsfesten Funkstation BS neu eingestellt werden. Für die Übertragung solcher Einstellinformationen und zur Trennung der einzelnen Zeitkanäle (Nachrichtenkanäle) im Zeitmultiplexrahmen kann ein Organisationskanal vorgesehen sein.

Wie bereits ausgeführt, werden die Zeitmultiplexrahmen eines Kanalsatzes im Sender der ortsfesten Funkstation BSeinander überlagert, gemeinsam verstärkt und auf einem HF-Träger über eine Antenne abgestrahlt. Im Empfänger der beweglichen Funkstation MS wird das empfangene Digitalsignal ins Basisband gemischt. Dann wird in dem dieser beweglichen Funkstation beim Verbindungsaufbau zugewiesenen Zeitschlitz, die Information durch Korrelation mit dem für diesen Nachrichtenkanal verwendeteten Codewort, das der beweglichen Funkstation ebenfalls beim Verbindungsaufbau mitgeteilt wird, zurückgewonnen. Im Empfänger der beweglichen Funkstation MS erfolgt also die Trennung der Nachrichtenkanäle des empfangenen Digitalsignals in umgekehrter Abfolge, d.h. Demultiplexen bezüglich Frequenz, Code und Zeit, wie bei der Bündelung der Nachrichtenkanäle in der ortsfesten Funkstation BS. Bei einer Rahmenlänge von z.B. 20ms für den Zeitmultiplexrahmen, einer Symboldauer des Spreizcodeworts von 25 us und einer Spreizung von 31 liegt die Chipdauer bei 0,806 ns und die Chiprate bei 1,24 Mcps. Damit ist auch die Chipdauer klein genug um eine hinreichende Auflösung und Ausnutzung der Mehrwege zu erlauben und Fading-Einflüsse weitgehend zu vermeiden.

Wie bereits ausgeführt, ist pro Kanalsatz mindestens ein Organisationskanal vorgesehen, auf dem die beweglichen Funkstationen MS zum Verbindungsaufbau zugreifen und über den der Verbindungsaufbau und einige Sonderdienste abgewickelt werden. Die beweglichen Funkstationen MS kennen die Frequenzlage der möglichen Kanalsätze, den entsprechenden Zeitkanal und die Codewörter für die innerhalb des digitalen Funkübertragungssystem vergebenen Organisationskanäle. Mit dieser Kenntnis kann die bewegliche Funkstation MS den für diese geeigneten Organisationskanal suchen und dort alle für den Zugriff (z.B. Frequenz der Schmalband-(Rück-)Richtung von beweglicher Funkstation MS zur ortsfesten Funkstation BS des jeweiligen Organisationskanals) und für den Verbindungsaufbau (z.B. Zeitkanal und Codewort für die Richtung von der ortsfesten Funkstation BS zur beweglichen Funkstation MS, sowie die Frequenz für die Schmalbandrichtung von der beweglichen Funkstation MS zu der ortsfesten Funkstation BS) benötigten Informationen empfangen. Die nutzbare Kanalkapazität eines Zeitmultiplexrahmens von 76 kbit/s (es gibt acht solcher Codeebenen auf einem HF-Träger) läßt sich in Schritten von beispeilsweise 100 bits/s beliebig aufteilen zwischen den beiden Extremwerten ein Teilnehmer zu 76 kbit/s und 760 Teilnehmer mit je 100 bit/s.

Werden in einer ortsfesten Funkstation BS mehr als 32 Nachrichtenkanäle benötigt, so können mehrere Kanalsätze unter Anwendung des Frequenzmultiplexverfahrens einander überlagert werden. Die verschiedenen Kanalsätze werden mit unterschiedlichen HF-Trägerfrequenzen abgestrahlt. In Fig. 2 sind der ortsfesten Funkstation BS1 die Kanalsätze 1 und 2 zugeordnet. Für die beiden der ortsfesten Funkstation BS1 zugeordneten Kanalsätze können, weil sie auf verschiedenen Trägerfrequenzen gesendet werden, die gleichen Codewörter verwendet werden.

Die Trennung der Nachrichtenkanäle von benachbarten ortsfesten Funkstationen BS erfolgt entweder unter Anwendung des Frequenzmultiplexverfahrens (verschiedene HF-Träger für die in diesen ortsfesten Funkstationen BS verwendeten Kanalsätze), unter Anwendung des Codemultiplexverfahrens (verschiedene Codewortsätze bei den verwendeten Kanalsätzen) oder durch Kombinationen dieser beiden Multiplexverfahren. Bei der in Fig. 2 dargestellten Ausführungsform unterscheidet sich der Kanalsatz 3 der ortsfesten Funkstation BS2 von den beiden Kanalsätzen 1 und 2 der ortsfesten Funkstation BS1 sowohl im Codewortsatz (2. Ziffer der Kanalkennung) wie auch durch die verwendete HF-Trägerfrequenz (3. Ziffer der Kanalkennung). In genügend großen räumlichen Abständen (festgelegt durch auftretende Gleichkanalstörungen) von einer Zelle zur anderen kann ein in dieser Zelle eingesetzter Kanalsatz (HF-Träger und/oder Codewortsatz) wiederholt werden. Dabei führt die Möglichkeit der Verwendung der gleichen HF-Trägerfrequenz in der entfernten Funkzelle und/oder unterschiedliche Codewortsätze zu benutzen, zu einer zusätzlichen Flexibilität und Freiheit in der reuse-Planung und erleichert die Einführung von Kleinzellenstrukturen.

Für die Übertragungsrichtung von den beweglichen Funkstationen MS zu der ortsfesten Funkstation BS kann beispielsweise eine Schmalbandübertragung mit Frequenzkanälen im 25 KHz-Raster vorgesehen sein. In den Funkzellen selbst ist die Frequenzeinteilung nicht fest, vielmehr werden die Frequenzen von der ortsfesten Funkstelle BS frei vergeben.

Fig. 3 zeigt das Blockschaltbild des Sendeteils der ortsfesten Funkstation BS. Der im Basisband übertragene Daten-/Sprachstrom setzt sich folgendermaßen zusammen. Die digitalisierte Sprache jedes einzelnen Kanals wird zunächst in einem Transcoder 1 von PCM auf das für die Funkübertragung erforderliche Übertragungsverfahren mit entsprechend geringerer Bitrate umcodiert. An der Schnittstelle B-B kann eine Datenquelle angeschlossen werden. In einem mit der Datenquelle bzw. den Transcoder 1 verbundenen Kanalcodierer 2 wird eine spezielle Kanalcodierung zum Schutz signifikanter Bits gegen Übertragungsfehler auf dem Übertragungskanal hinzugefügt. Diese Kanalcodierung kann je nach zu übertragendem Dienst unterschiedlich sein. In einem mit dem Kanalcodierer 2 verbundenen Multiplexer 3 wird in den Datenstrom die verbindungsbegleitende Signalisierung und die von einer Synchronisierschaltung 4 herrührende Synchronisationsinformation hinzugefügt. Das TDM-Signal (Time Division Multiplex-Signal) am Ausgang des TDM-Multiplexers 3 enthält also bei der in Fig. 3 dargestellten Ausführungsform vier Sprach-/Datenkanäle, einen verbindungsbegleitenden Signalisierungskanal (für ein TDM-Kanalbündel) sowie die für die Synchronisation in den beweglichen Funkstationen MS erforderlichen Synchronisationsbits. Die Synchronisationsbits werden in das TDM-Signal eingeblendet, wie dies in der P 35 11 430.4 vorgeschlagen ist.

Das TDM-Signal am Ausgang des Multiplexers 3 wird mit den jeweiligen von Codegneratoren 5 erzeugten Codeworten multipliziert, wobei jeweils zwei Bit zu einem Symbol zusammengefaßt und mit dem gewünschten Code gespreizt werden. Der Codegenerator 5 ist mit einer Steuereinrichtung 15 verbunden und fügt auf Befehl der Steuereinrichtung 15 Synchronisiersymbole anstelle von Datensymbolen in den am Ausgang des Multiplexers 3 auftretenden kontinuierlichen Datenstrom ein. Auf das gespreizte Signal wird ein den Eigenschaften des Funkübertragungskanals angepaßtes Modulationsverfahren angewandt, beispeilsweise wird mit dem gespreizten Signal dann die Phase eines aus einem Oszillator 6 stammenden Trägersignals umgetastet, wodurch ein mit der Information und dem Codewort verknüpftes, bei einer niedrigen Zwischenfrequenz moduliertes BPSK (Binary Phase Shift Keying) Signal entsteht. Das modulierte CDM-Signal wird einem Summierer 7 zugeführt, dessen Ausgang mit einem Bandpaßfilter 8 verbunden ist. Acht dieser modulierten CDM-Signale bilden nach Addition und Bandpaßfilterung ein in der Amplitude mehrstufiges Gesamtsignal, das schließlich auf die Endfrequenz umgesetzt wird.

Hierzu ist als Mischoszillator ein Synthesizer 9 vorgesehen, welcher innerhalb des Frequenzbereichs des digitalen Funkübertragungssystems mit entsprechenden Stufen geschaltet werden kann. Der Synthesizer 9 ist nur für die wenigen möglichen Frequenzen der FDM-Stufe (Frequency Division Multiplex-Stufe) ausgelegt. Die Mischung des CDM-Signals mit der entsprechenden vom Synthesizer 9 gelieferten Frequenz erfolgt in einer Einrichtung 10, welche mit einem Bandpaßfilter 11 verbunden ist. Der Ausgang des Bandpaßfilters 11 ist mit einem Leistungsverstärker 12 verbunden und das herausfgefilterte und verstärkte Sendesignal gelangt über einen Senderkoppler 13 zur Antenne 14. Bei kleineren ortsfesten Funkstationen BS mit bis zu 32 Nachrichtenübertragungskanälen entfällt der Senderkoppler 13 völlig.

Die Kanal- und Codegeneratoreinstellung, die richtige Auswahl der Kanalcodierung und die Einfügungen von Meldungen in den Organisationsdatenstrom erfolgt mittels der in der ortsfesten Funkstation BS angeordneten Steuereinrichtung 15. Der ausgewählte Funkübertragungskanal kann dabei ein TDM-Kanal in einer CDM-Ebene sein (vgl. P 35 11 430.4).

Fig. 4 zeigt das Blockschaltbild des Empfangsteils der beweglichen Funkstation MS. Das von einer gemeinsamen Sende-/Empfangstenne 16 empfangene Signal gelangt über ein Empfangsfilter eines Duplexers 17 zur Eingangsstufe 18 des Empfängers. Die Anforderungen an das Empfangsfilter des Duplexers 17 sind relativ gering, so daß sich auch für bewegliche Funkstationen MS mit geringer Diensteanforderung, z.B. einfaches Datenfunkgerät, eine kostengünstige Lösung ergibt. In der Eingangsstufe 18 wird das Signal verstärk und dann mit einer aus einem Synthesizer 19 stammenden Synthesizerfrequenz auf eine Zwischenfrequenz gemischt.

Das Zwischenfrequenzsignal wird einem ZF-Teil 20 zugezugeführt, in dem eine weitere Verstärkung und Filterung des Signals vorgenommen wird. Auch für den Synthesizer 19 kann wie für den Synthesizer 9 der ortsfesten Funkstation BS ein einfacher Synthesizer verwendet werden, welcher sich kostengünstig realisieren läßt. Im ZF-Teil 20 sind Filter angeordnet, welche die Nachbarkanalselektion zur Abgrenzung gegen benachbarte Breitbandkanäle bzw. zur Unterdrückung von Mischprodukten dienen. Die eigentliche Rauschfilterung erfolgt in Korrelatoren 23 bis 25. Mit dem ZF-Teil 20 ist eine Amplituden-Regelschaltung 21 verbunden, welche das Ausgangssignal des ZF-Teils 20 auf einen ausreichenden Pegel zur Ansteuerung der nachfolgenden Schaltungen anhebt und eine mögliche Übersteuerung dieser Schaltungen verhindert. Die Amplituden-Regelschaltung 21 gleicht unterschieldiche Funkfelddämpfungen und Pegelschwankungen aufgrund von Abschattungen aus, so daß in den nachfolgenden Einrichtungen der beweglichen Funkstation MS eine lineare Verarbeitung durchgeführt werden kann. Die Regelzeitkonstante der Amplituden-Regelschaltung 21 wird im wesentlichen von diesen Abschattungen bestimmt.

Das in der Leistung geregelte ZF-Signal am Ausgang der Amplituden-Regelschaltung 21 wird in einem mit dieser verbundenen Demodulator 22 ins Basisband umgesetzt. Dies kann beispielsweise bei Anwendung einer BPSK-Modulation nach dem Prinzip einer Costasschleife durchgeführt, so daß Frequenz und Phase mit berücksichtigt werden. Mehrdeutigkeiten um ganzzahlige Vielfache von 180° können anhand der Polarität der empfangenen Synchronworte (vgl. P 35 11 430.4) erkannt und entsprechend ausgeglichen werden.

Mit dem Demodulator 22 sind drei Korrelatoren 23, 24 und 25 verbunden, welche von einer Steuereinrichtung 26 auf die gerade gültigen Codes 1 und 2 und auf einen in der Funkzone für das gesamte Kanalbündel gültigen Synchroncode eingestellt werden. Mittels der Steuereinrichtung 26 wird der empfangene Organisationsdatenstrom ausgewertet, indem die Daten der von dem Teilnehmer gewünschten Dienste und die Daten für die Geräterat vorgesehenen Funkübertragungskanäle ausgelesen werden, ein im Organisationsdatenstrom als frei ausgewiesener und auch im in der beweglichen Funkstation MS schaltbarer Funkübertragungskanal auswählt wird und anschließend ein Zugriffssignal auf diesem ausgewählten Funkübertragungskanal zur ortsfesten Funkstation BS gesendet wird.

Das Ausgangssignal der Korrelatoren 23 bis 25 wird einerseits zur Ableitung von Symboltakt, Rahmentakt sowie Bittakt verwendet anderseits wird dieses zur Vermessung des augenblicklich gültigen Mehrwegeprofils herangezogen. Da ein einheitlicher Synchroncode mit entsprechend größerem Pegel in dem gesamten Kanalbündel zum gleichen Zeitpunkt abgestrahlt wird (vgl. P 35 11 430.4) ergibt sich eine sichere Synchronisationserkennung und Vermessung des Mehrwegeprofils.

Die Ausgänge der Korrelatoren 24 und 25 sind mit Abtastschaltungen 27, 28 verbunden, welche die Ausgangssignale der Korrelatoren 24 und 25 abtasten und das jeweilig Ergebnis einer Entscheidungsstufe 29 zuführen. Dabei werden die Ergebnisse der synchron zu den Echos der Mehrwege-ausbreitung ablaufenden Abtastungen in der Entscheidungs-stufe 29 proportional zur Amplitude der Echos (mittels einer Einrichtung 30) gewichtet. Die Entscheidungsstufe 29 hat die Aufgabe, den gesendeten Code und die Polaritätdes Codes zu schätzen. Der Schätzwert gestattet somit dieAuswahl des mit der größten Wahrscheinlichkeit gesendeten Symbols. Nach der Symbol-Bit-Umwandlung in der Entscheidungsstufe 29 wird das Ausgangssignal einem mit der Entscheidungsstufe 29 verbundenen TDM-Demultiplexer 31 zugeführt. Der Demultiplexer 31 ist mit einem Kanal-Decodierer 32 verbunden an dessen Ausgang der gesendete Datenstrom wieder zur Verfügung steht. Bei digitaler Sprachübertragung wird in einem Sprachdecoder 33 das digitale Sprachsignal decodiert, einem D/A-Wandler und einem mit diesem verbundenen Lautsprecher zugeführt.

Ist in der beweglichen Funkstation MS beispielsweise die Dienstart Datendienst realisiert, so können die am Ausgang des Kanaldecodieres 32 auftretenden Daten sofort z.B. angezeigt oder ausgedruckt werden.

## Patentansprüche

1. Digitales Funkübertragungssystem mit in einem Zellularnetz angeordneten ortsfesten Funkstationen (BS) und mit einer Vielzahl voneinander unabhängig beweglicher Funkstationen (MS), wobei die in einem gemeinsamen Funkübertragungskanal übertragenenNachrichten nach dem Zeitmultiplexverfahren zusammengefaßt werden, dadurch gekennzeichnet, daß die Dauer der Zeitschlitze des Zeitmultiplexrahmens von der ortsfesten Funkstation (BS) so veränderbar ist, daß momentane Anforderungen der beweglichen Funkstationen (MS) an Kanalkapazität erfüllt werden.

2. Digitales Funkübertragungssystem nach Anspruch 1, dadurch gekennzeichnet, daß die ortsfeste Funkstation (BS) in einer über den Organisationskanal zu den Empfängern in den beweglichen Funkstationen (MS) übertragenen Funkmeldung das erste und letzte Bit des dieser zugeordneten Zeitschlitzes mitteilt.

3. Digitales Funkübertragungssystem nach Anspruch 1, dadurch gekennzeichnet, daß die für die Nutzinformation zur Verfügung stehende Kanalkapazität des Zeitmultiplexrahmens in Schritten zwischen den Extremwerten minimale und volle Kanalkapazität auf die beweglichen Funkstationen (MS) aufteilbar ist.

## Claims

1. A digital radio transmission system, comprising base stations (BS) and a multiplicity of mutually independent mobile stations (MS) in a cellular network, the messages transmitted via a common transmission channel being grouped according to the time-division multiplex method, characterized in that the duration of the time slots of the time-division multiplex frame can be changed by the base station (BS) in such a way that channel capacity requirements of the mobile stations (MS) at any given moment can be fulfilled.

2. A digital radio transmission system as claimed in Claim 1, characterized in that the base station (BS) communicates, via the organization channel, to the receivers in the mobile stations (MS) the first and last bit of the time slot allocated to them.

3. A digital radio transmission system as claimed in Claim 1, characterized in that the channel capacity of the time-division multiplex frame available for useful information can be divided stepwise between the extreme values of minimum and maximum channel capacity among the mobile stations (MS).

## Revendications

1. Système de radiotransmission numérique comportant des stations radio fixes (BS) disposées en un réseau cellulaire et une pluralité de stations radio mobiles (MS) indépendamment les unes des autres, les informations transmises dans un canal de radiotransmission commun étant rassemblées selon le procédé de multiplexage dans le temps, caractérisé en ce que la durée des tranches de temps de la trame de multiplexage dans le temps de la station radio fixe (BS) peut être modifiée de telle sorte que soient satisfaites les exigences momentanées des stations radio mobiles (MS) en matière de capacité en canaux.

2. Système de radiotransmission numérique selon la revendication 1, caractérisé en ce que la station radio fixe (BS) communique, dans un message radio transmis via le canal d'organisation aux récepteurs des stations radio mobiles (MS), le premier et le dernier bit de la tranche de temps affectée à celles-ci.

3. Système de radiotransmission numérique selon la revendication 1, caractérisé en ce que la capacité en canaux de la trame de multiplexage dans le temps qui est à disposition pour les informations utiles peut être répartie en fractions entre les valeurs extrêmes minimum et totale de la capacité en canaux sur les stations radio mobiles (MS).
